# EUROPEAN PATENT APPLICATION

(11) **EP 4 378 302 A2**
(43) Date of publication of application: **05.06.2024**
(21) Application number: 23275156.0
(22) Date of filing: 07.11.2023
(51) Int. Cl.: A01G 9/14, A01G 31/06

(54) **VERTICAL FARMING RACKING SYSTEM**

(30) Priority: 08.11.2022 GB 202216605
(71) Applicant: Pointer Group Ltd, Leeds Yorkshire LS27 0LL (GB)
(72) Inventor: CLARKE, Alvin, Northampton, NN7 1LF (GB)
(74) Representative: Corbyn, David Jonathan

(57) **Abstract**

The present invention provides a vertical farming racking system (1). The system includes a first plurality of vertical frame members (3) spaced apart from one another in a linear manner, and a second, opposing plurality of vertical frame members (3'), each frame member of the second plurality being spaced apart from and directly opposing a corresponding vertical frame member of the first plurality. A plurality of bracing members (5) is provided, disposed between and connecting opposing vertical frame members (3,3') from the first and second pluralities. Also provided are one or more horizontal support members (7) disposed between and connecting adjacent vertical frame members (3) in the first plurality, and one or more horizontal support members (7') disposed between and connecting adjacent vertical frame members (3') in the second plurality, located opposite and in the same horizontal plane as corresponding support members connecting vertical frame members in the first plurality. First and at least second rail members (9) are provided extending across first and second opposing horizontal support members (7) and positioned perpendicular thereto, and in some aspects at least one of said rail members (9) is arranged to receive irrigation apparatus therewith and includes one or more apertures or conduit means (13) arranged to permit connection of irrigation apparatus with one or more crop cultivation members, in use. In other aspects, the rail members (9) are arranged to extend beyond at least a first face of the racking system (1), said first face defined by the plane in which the first plurality of vertical frame members and associated one or more horizontal support members connecting the same, are located.

## Description

The invention to which this application relates is a vertical farming racking system.

Vertical farming is the process of growing plants or crops in a controlled environment in vertically spaced rows or layers. The process aims to optimize plant/crop growth and use available space more efficiently than conventional farming - the ability to grow crops in a third dimension (vertically) as opposed to solely in two dimensions (across farmland) means that such large areas of land are not necessarily required, enabling vertical farms to be set up in more locations, in particular where space may be at a premium, for example, in urban areas. The main advantage of utilizing vertical farming technologies is the increased crop yield that comes with a smaller unit area of land requirement. Vertical farms have other advantages in that the controlled environments in which the crops or plants are grown can be done so predictably and serve to greatly reduce or remove the risk of bacteria like E *coli,* and products are fully traceable from seed to shelf. Vertical farms also use 70-95% less water than traditional farming methods as the systems can recapture and recycle water, rather than it going to waste due to evaporation and poor irrigation.

As mentioned above, one of the most important factors in vertical farming is the ability to use the space which is available as efficiently as possible. This not only includes being able to fit as many racking systems, which hold and cultivate the crops, into the available space, but also to ensure that the crops remain easily accessible from the racking systems by personnel or automated equipment. Further, the number of layers in a given height of a rack can be maximized if the installation and positioning of irrigation, electrical and lighting equipment is optimised, which relies on the framework of the racking system to be constructed optimally.

It is therefore an aim of the present invention to provide a vertical farm racking system which overcomes the aforementioned problems associated with the prior art.

According to a first aspect of the invention there is provided a vertical farming racking system, said system including:
a first plurality of vertical frame members spaced apart from one another in a linear manner;
a second, opposing plurality of vertical frame members, each frame member of the second plurality being spaced apart from and directly opposing a corresponding vertical frame member of the first plurality;
a plurality of bracing members disposed between and connecting opposing vertical frame members from the first and second pluralities;
one or more horizontal support members disposed between and connecting adjacent vertical frame members in the first plurality;
one or more horizontal support members disposed between and connecting adjacent vertical frame members in the second plurality, located opposite and in the same horizontal plane as corresponding support members connecting vertical frame members in the first plurality; and
first and at least second rail members extending across first and second opposing horizontal support members and positioned perpendicular thereto,
characterized in that at least one of said rail members is arranged to receive irrigation apparatus therewith and includes one or more apertures or conduit means arranged to permit connection of irrigation apparatus with one or more crop cultivation members, in use.

Typically, said at least one rail member is arranged to permit irrigation apparatus to be located with an underside thereof, and one or more crop cultivation members to be located on an upper side thereof.

Preferably, said one or more apertures or conduit means are located in and through an upper side or face of the at least one rail member.

In one embodiment, said at least one rail member includes connection means located with the one or more apertures or conduit means, permitting connection between irrigation apparatus and the one or more crop cultivation members, in use. Typically, said connection means are provided in the form of one or more spigot members, permitting the flow of water from the irrigation apparatus, through the upper face or side of the at least one rail member and into the one or more crop cultivation members, in use.

In some embodiments, at least a third rail member is provided, and located in parallel with the first and second rail members.

Typically, the first, second and third rail members are arranged spaced apart from and parallel to one another, thereby providing two outer rail members, and one centrally located rail member. Preferably, said centrally located rail member is arranged to receive irrigation apparatus therewith and includes one or more apertures or conduit means.

The present invention therefore provides a compact and convenient racking system formed so as to efficiently accommodate irrigation apparatus and provide secure connection to crop cultivation members. The improved use of available space within the area of the racking system will thus enable more crops to be cultivated and grown within the same space.

In one embodiment, the rail members are arranged to extend beyond at least a first face of the racking system, said first face defined by the plane in which the first plurality of vertical frame members and associated one or more horizontal support members connecting the same, are located. Typically, the extension of said rail members from the first face forms a cantilevered arrangement.

In one embodiment, the rail members are arranged to extend beyond at least a second face of the racking system, said second face defined by the plane in which the second plurality of vertical frame members and associated one or more horizontal support members connecting the same, are located. Typically, the extension of said rail members from the first and second faces forms a dual-cantilevered arrangement.

By extending the rail members beyond the traditional face or faces of the racking system, this allows storage of multiple crop cultivation members along the depth of the racking system in a single layer or row, while maintaining a substantially level or horizontal plane on which they rest, with minimal deflection. This is important to ensure even watering of the crop to a desired or required level across the base of the cultivation members. Ensuring deflection is minimised also serves to reduce the volume fluid required to fill the cultivation members thereby also reducing fill time and drain time. Extending beyond the faces of the racking system also provides for easier access to the crops and improved ventilation, reducing or removing the need for expensive ventilation apparatus.

In one embodiment, said bracing members are disposed diagonally between opposing vertical frame members. Typically, said bracing members are arranged to be adjustable in length and diagonal position between the opposing vertical frame members. Further typically, once positioned as required, the bracing members are fixed in position.

The bracing members provide rigidity and stability to the racking system but, prior to being fixed in position, are adjustable in length and their attachment position on the vertical frame members in order to accommodate varying types of irrigation / electrical / lighting apparatus which form the complete vertical farm, thereby ensuring the most efficient arrangement possible and maximizing light and ventilation through the system.

Preferably, the first and second pluralities of vertical frame members each include third and/or further vertical frame members, thereby extending the capacity of the racking system.

Typically, a plurality of vertically spaced rows or layers of support members and rail members are provided between first and at least second vertical frame members of the first and second pluralities of the same.

Preferably, second and/or further pluralities of rows or layers of support members and rail members are provided as pairs of third and/or further vertical frame members are provided with the system.

Typically, said horizontal support members are fixed in position.

Typically, said rail members are fixed in position, on the horizontal support members.

Preferably, the upper faces or sides of the rail members, on which the one or more crop cultivation members are arranged to be located in use, are substantially flat. Typically, no fixing members or other such apparatus are provided thereon, thereby creating an even and level surface.

In one embodiment, an underside of the horizontal support members includes fixing or attachment means provided therewith, arranged to receive, or attach lighting apparatus thereto, in use.

In one embodiment, at least some of the vertical frame members include attachment means and/or apertures for the receipt and/or fixing of irrigation apparatus thereto, in use. Typically, said vertical frame members may be provided with a recessed face or profile for receipt and attachment of irrigation apparatus, in use.

In some embodiments, at least some of the vertical frame members may be provided with substantially U- or H-shaped profiles, thereby permitting receipt of irrigation apparatus in the recesses thereof, in use.

In some embodiments, at least some of the vertical frame members may be provided as hollow members with a substantially square profile, thereby permitting the receipt of irrigation apparatus therein, in use. Typically, two or more apertures may be provided in sides or walls of the vertical frame members to permit irrigation apparatus to enter and exit therefrom, in use.

In some embodiments, the at least one rail member arranged to receive irrigation apparatus therewith and including one or more apertures or conduit means, may be provided with a substantially U-/n- or H-shaped profile, thereby permitting receipt of irrigation apparatus in the recess thereof, in use.

In some embodiments, the at least one rail member arranged to receive irrigation apparatus therewith and including one or more apertures or conduit means, may be provided as a hollow member with a substantially square profile, thereby permitting the receipt of irrigation apparatus therein, in use. Typically, two or more apertures may be provided in sides or walls of the vertical frame members to permit irrigation apparatus to enter and exit therefrom, in use.

Typically, the vertical frame members include anchor portions at bases thereof, provided to secure the racking system to a surface on which it locates, in use.

Typically, the system is formed to extend to a vertical height of approximately 10m.

Preferably, the system is arranged to permit access from first and second opposing faces thereof.

Standard racking or shelving solutions do not provide the same degree of storage and access efficiency, while also accommodating electrical, lighting and irrigation apparatus, as that of the present invention.

In some embodiments, first and second opposing horizontal frame members are provided, located at and along upper ends of the respective first and second pluralities of vertical frame members. Typically, a plurality of bracing members is disposed between and connecting the opposing horizontal frame members.

In one embodiment, said bracing members are disposed diagonally between the opposing horizontal frame members. Typically, said bracing members are arranged to be adjustable in length and diagonal position between the opposing horizontal frame members. Further typically, once positioned as required, the bracing members are fixed in position.

According to a further aspect of the invention there is provided a vertical farming racking system, said system including:
a first plurality of vertical frame members spaced apart from one another in a linear manner;
a second, opposing plurality of vertical frame members, each frame member of the second plurality being spaced apart from and directly opposing a corresponding vertical frame member of the first plurality;
a plurality of bracing members disposed between and connecting opposing vertical frame members from the first and second pluralities;
one or more horizontal support members disposed between and connecting adjacent vertical frame members in the first plurality;
one or more horizontal support members disposed between and connecting adjacent vertical frame members in the second plurality, located opposite and in the same horizontal plane as corresponding support members connecting vertical frame members in the first plurality; and
first and at least second rail members extending across first and second opposing horizontal support members and positioned perpendicular thereto,
characterized in that the rail members are arranged to extend beyond at least a first face of the racking system, said first face defined by the plane in which the first plurality of vertical frame members and associated one or more horizontal support members connecting the same, are located.

Typically, the extension of said rail members from the first face forms a cantilevered arrangement.

In one embodiment, the rail members are arranged to extend beyond at least a second face of the racking system, said second face defined by the plane in which the second plurality of vertical frame members and associated one or more horizontal support members connecting the same, are located. Typically, the extension of said rail members from the first and second faces forms a dual-cantilevered arrangement.

By extending the rail members beyond the traditional face or faces of the racking system, this allows storage of multiple crop cultivation members along the depth of the racking system in a single layer or row, while, crucially, maintaining a substantially level or horizontal plane on which they rest, with minimal deflection. Minimal deflection of the cultivation members while resting on the rail members of the racking system is critical to ensure even watering of the crop to a desired or required level across the base of the cultivation members. Ensuring deflection is minimised also serves to reduce the volume fluid required to fill the cultivation members thereby also reducing fill time and drain time. Extending beyond the faces of the racking system also provides for easier access to the crops and improved ventilation, reducing or removing the need for expensive ventilation apparatus.

In one embodiment, at least one of said rail members is arranged to receive irrigation apparatus therewith and includes one or more apertures or conduit means arranged to permit connection of irrigation apparatus with one or more crop cultivation members, in use.

Typically, said at least one rail member is arranged to permit irrigation apparatus to be located with an underside thereof, and one or more crop cultivation members to be located on an upper side thereof.

Preferably, said one or more apertures or conduit means are located in an upper side or face of the at least one rail member.

Embodiments of the present invention will now be described with reference to the accompanying figures, wherein:
Figures 1a-d illustrate a perspective view of a vertical farm racking system and close-up views thereof, in accordance with an embodiment of the present invention;
Figure 2 illustrates a perspective view of a vertical farm racking system, according to an embodiment of the present invention, with additional lighting, electrical and irrigation apparatus installed;
Figure 3 illustrates a larger vertical farm installation, including a plurality of vertical farm racking systems in accordance with an embodiment of the present invention;
Figures 4a-b illustrate side-on views of a portion of a vertical farm racking system, in accordance with an embodiment of the present invention; and
Figure 5 illustrates a front-on view of a portion of a vertical farm racking system, in accordance with an embodiment f the present invention, with additional irrigation and lighting apparatus installed.

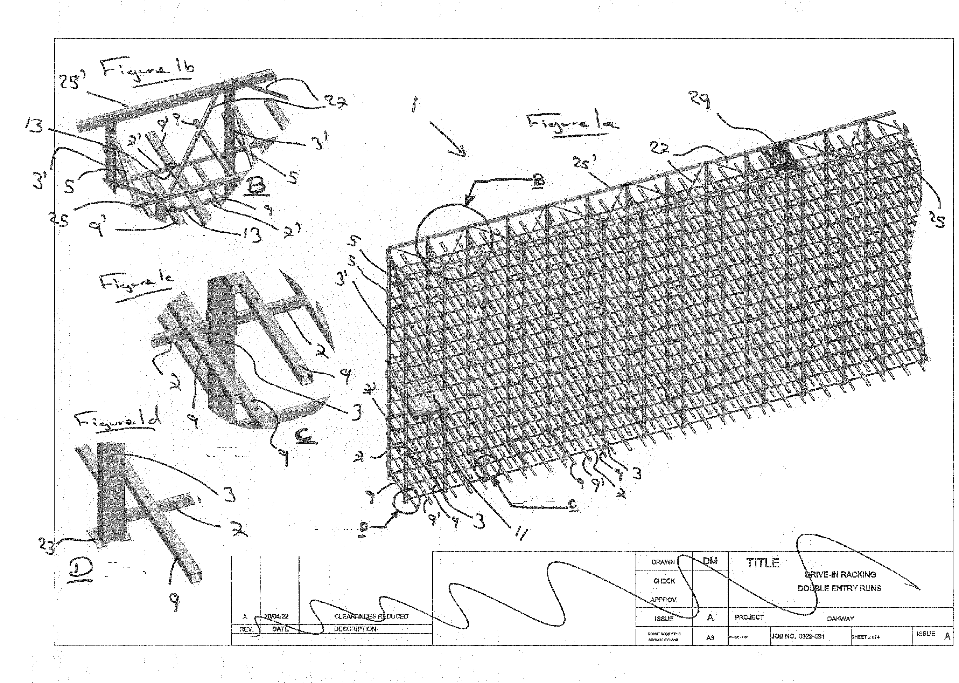

Referring firstly to Figures 1a-d, there is provided a vertical farm racking system 1, which is formed from a framework of multiple components. Forward and rearward sets of vertical frame members 3, 3' are provided, each set being arranged in a linear manner, with adjacent frames spaced apart from one another. Frames 3 from the forward set are arranged to be directly opposing corresponding frames 3' from the rearward set. Connecting directly opposing frames 3, 3' there is provided a plurality of bracing members 5. The bracing members 5 are disposed between the frame members 3, 3' which they connect and are fixed in position by bolting. The bracing members 5 are generally arranged and fixed diagonally between frame members such that there is effectively a continuously zig-zagging connection between frame members 3, 3' from the bottom of the system 1 to the top. Adjacent frame members in the forward and rearward sets are connected via the provision of horizontal support members in the form of support beams 7. Support beams 7 connecting adjacent frames in the forward set are provided to be directly opposite and in the same horizontal plane as corresponding support beams 7' connecting adjacent frames 3' in the rearward set. The support beams 7, 7' are all fixed in position to ensure the rigidity and stability of the racking system 1. Finally, the system 1 includes rail members provided in the form of support rails 9, which extend across the support beams 7, 7' and are perpendicular thereto. The support rails 9 rest on and are fixed to the support beams 7, 7' and allow the placement of crop cultivation trays 11 to be placed thereon. At least one of the support rails 9' is arranged to receive irrigation apparatus therewith and includes one or more apertures or conduits 13 to permit the irrigation apparatus to extend from an underside of the rail 9' through an upper side or face 15 thereof and engage the crop cultivation trays 11, in use.

In preferred embodiments of the invention, within each section of the system 1, between first and second upright frames 3 of the forward set and first and second upright frames 3' of the rearward set, three support rails 9 are provided to be fixed on to and extending across two opposing support beams 7, 7'. The three support rails 9 are arranged spaced apart from and parallel to one another, providing two out rails 9 and one centrally located rail 9'. The centrally located rail 9' is provided to be the rail arranged to receive irrigation apparatus therewith and including one or more apertures or conduits 13. In some embodiments of the invention, connection means in the form of a spigot or other such members may be located at the aperture 13 of the rail 9', which serve to connect the irrigation apparatus located below the upper surface of the rail 9' and the crop cultivation trays 11 which are located on the top surface of the rail 9' and other rails 9. This permits the flow of water through the irrigation system and into the cultivation trays 11. The present invention therefore provides a compact and convenient racking system 1 formed so as to efficiently accommodate irrigation apparatus and provide secure connection to the crop cultivation trays 11. The improved use of available space within the area of the racking system 1 will thus enable more crops to be cultivated and grown within the same space.

A further feature of the racking system 1 of the present invention is the provision of the rail members 9, 9' to extend beyond a first face of the system 1. That is to say, the face is defined by the vertical plane created by the forward upright frames 3 and connecting support beams 7, and the rails 9, 9' are arranged to extend beyond this plane, thereby increasing storage capacity for cultivation trays 11 and creating a cantilever effect. In other, preferred embodiments, a similar arrangement is provided on the rearward side, wherein the rails 9, 9' are arranged to extend beyond a second face of the system 1, that face being defined by the vertical plane created by the rearward upright frames 3' and connecting support beams 7'. The rails 9, 9' can be arranged to extend beyond this plane, further increasing storage capacity for the cultivation trays 11 and creating a dual-cantilever effect. This, in effect, allows the trays 11 to be "double-stacked" provided two trays in each section. By extending the rails 9, 9' beyond the traditional face or faces of the racking system 1, this allows storage of multiple crop cultivation trays 11 along the depth of the racking system 1 in a single section, while maintaining a substantially level or horizontal plane on which they rest, with minimal deflection. This is critical to ensure even watering of the crop to a desired or required level across the base of the cultivation trays 11. Systems or standard racking units whose original purpose is not to accommodate the trays and apparatus required for vertical farming, and which are simply adapted for use in this manner are not as sturdy or supportive as the system of the current invention, and so deflection of the trays at their distal ends will likely be very noticeable. Ensuring deflection is minimised also serves to reduce the volume fluid required to fill the trays 11, thereby also reducing fill time and drain time. In systems wherein deflection is not minimised, the water level will not be even, and the amount required to ensure the whole tray is filled to a minimum level will be greater, thereby adding to the inefficiency of the system.

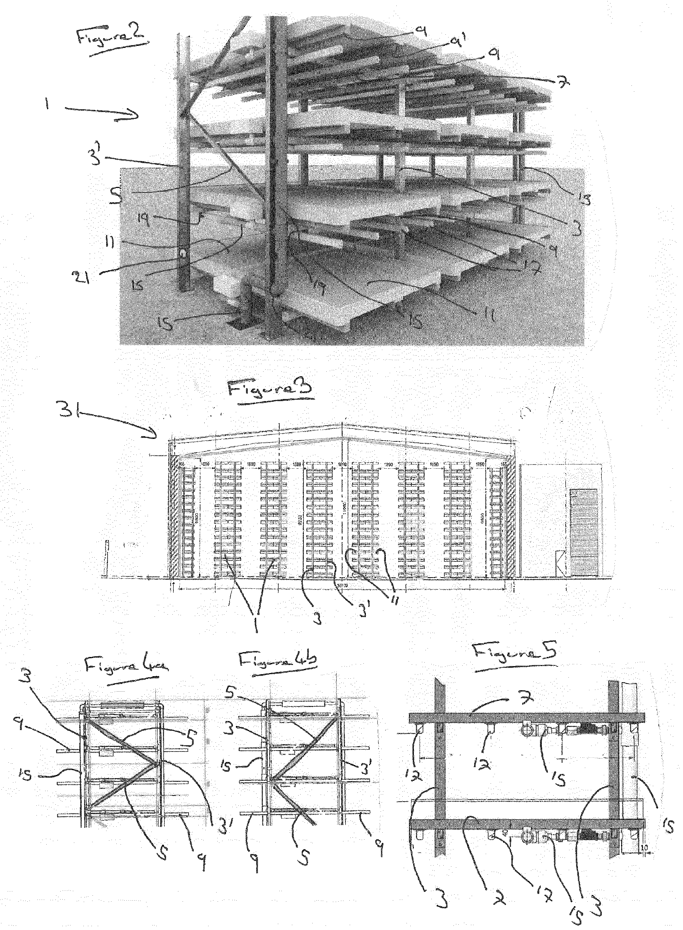

Extending beyond the faces of the racking system 1 also provides for easier access to the crops and improved ventilation, reducing or removing the need for expensive ventilation apparatus. This can be shown more clearly in Figure 2, which illustrates a further close-up view of a racking system 1 according to the present invention, but has additional irrigation apparatus 15, cultivation trays 11 and lighting apparatus 17 included for reference. Figure 3 illustrates a series of racking systems 1, in a side-on view, provided in a vertical farming facility 31, and which again illustrates the rails 9, 9' and thus the trays 11 located thereon extending beyond the plane of the forward and rearward upright frames 3, 3'.

The bracing members 5 may be provided to be adjustable in length prior to fixing in position in the system 1. This enables the specific angle of the diagonal position in which they are to be fixed to be adjusted. Examples of such arrangements are illustrated in Figures 4a-b, showing side-on views of systems 1, wherein the bracing members 5 may be adjusted to accommodate various additional equipment included to complete the vertical farm, such as lighting, electrical or irrigation apparatus. The bracing members 5 provide rigidity and stability to the racking system 1 and while they may be adjustable, once they are provided with the system they are fixed in place, to provide said stability and rigidity. The adjustable nature of the bracing members 5 also ensures the most efficient arrangement possible is provided, maximizing light and ventilation through the system 1.

Multiple layers or sections may be formed in a single column of the racking system 1 by providing further, vertically spaced layers of support beams 7, 7' and rails 9, 9' located between pairs of forward and rearward upright frames 3, 3'. Depending on the height of the facility in which the system 1 is located, the system may extend to a height of approximately 10m, permitting the provision of approximately 15 layers or sections. If each layer or section is "double-stacked", this allows for approximately 30 cultivation trays 11 to be located and stored in a single column. The length of the racking system 1 can also be extended as is required according to the space available in the facility in which it is located by providing further pairs of upright frames 3, 3', creating additional columns in which the multiple layers or sections are located. This results in the extended system 1 as shown in Figure 1a.

As with the other features of the system 1, the rails 9, 9' are fixed in position on the support beams 7, 7'. That is to say, a lower face, side or edge of the rails 9, 9' is bolted, welded or otherwise fixed to an upper face or side of the support beams 7, 7' where they cross/meet. The upper sides or faces of the rails 9, 9' are kept flat and free of any fixing parts or other such apparatus, thereby creating a completely even and level surface on which the cultivation trays 11 can rest. An underside of the support beams 7, 7', however, may include additional fixing or attachment members 19 which enable lighting systems to be attached thereto.

The upright frames 3, 3' may be provided in varying forms depending on whether they are formed to purely support the rest of the framework, or if they also have further irrigation apparatus and/or pipework 15 attached thereto. In the latter case, a number of apertures and/or attachment/fixing parts may be formed in or provided with one or more of the upright frames 3, shown by way of example in Figures 2 and 5. The frames 3 may have apertures 21 located therein to allow pipework 15 to move freely form one side to another. Additionally or alternatively, the frames 3 may in some embodiments be provided with a recessed face to accommodate the pipework 15. For example, they may be formed having a substantially U- or H-shaped profile, allowing the pipework 15 to fit in the natural recess formed by the profile. In other embodiments, the frames 3 may have a substantially square and hollow profile, allowing the pipework to be located in the interior of the frame 3. Holes or other apertures may then be provided to allow the entrance and exit of the pipework 15. Such arrangements serve to increase the efficient use of space in the system, maximizing light and ventilation, but also maintains the stability and rigidity of the framework. Similarly, the rail 9' which accommodates the irrigation pipework 15 and permits connection through the upper face of the rail 9' to the cultivation trays 11 may also be provided with similar such profiles, as is required by the specific design requirements of the farming system to be integrated with the racking system 1. In Figure 2, where the rail 9' is best illustrated, it is shown as having an inverted U-shaped profile (n-shape). Thus, pipework 15 can be located within the recess created by the profile and one or more apertures may be located in the appropriate positions in the upper face of the rail 9' to allow a spigot to connect the pipework 15 with the cultivation trays 11. As mentioned above, other profiles may be provided as may be determined by the specific design requirements of the vertical farming system to be integrated with the racking system 1.

The system is secured to the floor on which it is located via the provision of anchor brackets 23 located at the base of the upright frames 3, 3'. The top side of the system includes a pair or series of horizontal frame members 25, 25', which are located and connected to the top ends of the upright frames 3, 3'. Further bracing members 27 are then provided to be located between and connecting to the opposing horizontal frames 25, 25' or series of frames, in a similar manner to that of the bracing members 5 connecting the upright frames 3, 3'. That is to say, they are diagonally located and may be adjustable in length and position, but once in the desired position, are fixed. On top of the system 1, and positioned between the horizontal frames 25, 25' there may be mounted further ancillary equipment such as cabinets 29 or otherwise for the storage of wires or other electrical equipment. The system 1, in particular with the extended / cantilevered rails 9, 9' consequently allows access from both the forward and rearward faces thereof. Standard racking or shelving solutions do not provide the same degree of storage and access efficiency, while also accommodating electrical, lighting and irrigation apparatus, as that of the present invention.

## Claims

1. A vertical farming racking system, said system including:
a first plurality of vertical frame members spaced apart from one another in a linear manner;
a second, opposing plurality of vertical frame members, each frame member of the second plurality being spaced apart from and directly opposing a corresponding vertical frame member of the first plurality;
a plurality of bracing members disposed between and connecting opposing vertical frame members from the first and second pluralities;
one or more horizontal support members disposed between and connecting adjacent vertical frame members in the first plurality;
one or more horizontal support members disposed between and connecting adjacent vertical frame members in the second plurality, located opposite and in the same horizontal plane as corresponding support members connecting vertical frame members in the first plurality; and
first and at least second rail members extending across first and second opposing horizontal support members and positioned perpendicular thereto,
**characterized in that** at least one of said rail members is arranged to receive irrigation apparatus therewith and includes one or more apertures or conduit means arranged to permit connection of irrigation apparatus with one or more crop cultivation members, in use.

2. A racking system according to claim 1, wherein said at least one rail member is arranged to permit irrigation apparatus to be located with an underside thereof, and one or more crop cultivation members to be located on an upper side thereof, and one or more apertures or conduit means are located in and through an upper side or face of the at least one rail member.

3. A racking system according to claim 1, wherein said at least one rail member includes connection means located with the one or more apertures or conduit means, permitting connection between irrigation apparatus and the one or more crop cultivation members, in use, and provided in the form of one or more spigot members, permitting the flow of water from the irrigation apparatus, through the upper face or side of the at least one rail member and into the one or more crop cultivation members, in use.

4. A racking system according to claim 1, wherein at least a third rail member is provided, and located in parallel with the first and second rail members.

5. A racking system according to claim 4, wherein the first, second and third rail members are arranged spaced apart from and parallel to one another, thereby providing two outer rail members, and one centrally located rail member, and wherein said centrally located rail member is arranged to receive irrigation apparatus therewith and includes one or more apertures or conduit means.

6. A racking system according to claim 1, wherein the rail members are arranged to extend beyond at least a first face of the racking system, said first face defined by the plane in which the first plurality of vertical frame members and associated one or more horizontal support members connecting the same, are located, and the extension of said rail members from the first face forms a cantilevered arrangement.

7. A racking system according to claim 6, wherein the rail members are arranged to extend beyond at least a second face of the racking system, said second face defined by the plane in which the second plurality of vertical frame members and associated one or more horizontal support members connecting the same, are located, and the extension of said rail members from the first and second faces forms a dual-cantilevered arrangement.

8. A racking system according to claim 1, wherein upper faces or sides of the rail members, on which the one or more crop cultivation members are arranged to be located in use, are substantially flat, with no fixing members or other such apparatus provided thereon, thereby creating an even and level surface.

9. A racking system according to claim 1, wherein at least some of the vertical frame members include attachment means and/or apertures for the receipt and/or fixing of irrigation apparatus thereto, in use.

10. A racking system according to claim 9, wherein said vertical frame members are provided with a recessed face or profile for receipt and attachment of irrigation apparatus, in use; or are provided with substantially U- or H-shaped profiles, thereby permitting receipt of irrigation apparatus in the recesses thereof, in use; or are provided as hollow members with a substantially square profile, thereby permitting the receipt of irrigation apparatus therein, in use, and further include two or more apertures provided in sides or walls thereof to permit irrigation apparatus to enter and exit therefrom, in use.

11. A racking system according to claim 1, wherein the at least one rail member arranged to receive irrigation apparatus therewith and including one or more apertures or conduit means, is provided with a substantially U-/n- or H-shaped profile, thereby permitting receipt of irrigation apparatus in the recess thereof, in use, or be provided as a hollow member with a substantially square profile, thereby permitting the receipt of irrigation apparatus therein, in use.

12. A vertical farming racking system, said system including:
a first plurality of vertical frame members spaced apart from one another in a linear manner;
a second, opposing plurality of vertical frame members, each frame member of the second plurality being spaced apart from and directly opposing a corresponding vertical frame member of the first plurality;
a plurality of bracing members disposed between and connecting opposing vertical frame members from the first and second pluralities;
one or more horizontal support members disposed between and connecting adjacent vertical frame members in the first plurality;
one or more horizontal support members disposed between and connecting adjacent vertical frame members in the second plurality, located opposite and in the same horizontal plane as corresponding support members connecting vertical frame members in the first plurality; and
first and at least second rail members extending across first and second opposing horizontal support members and positioned perpendicular thereto,
**characterized in that** the rail members are arranged to extend beyond at least a first face of the racking system, said first face defined by the plane in which the first plurality of vertical frame members and associated one or more horizontal support members connecting the same, are located.

13. A racking system according to claim 12, wherein the rail members are arranged to extend beyond at least a second face of the racking system, said second face defined by the plane in which the second plurality of vertical frame members and associated one or more horizontal support members connecting the same, are located, and the extension of said rail members from the first and second faces forms a dual-cantilevered arrangement.

14. A racking system according to claim 12, wherein at least one of said rail members is arranged to receive irrigation apparatus therewith and includes one or more apertures or conduit means arranged to permit connection of irrigation apparatus with one or more crop cultivation members, in use.

15. A racking system according to claim 14, wherein said at least one rail member is arranged to permit irrigation apparatus to be located with an underside thereof, and one or more crop cultivation members to be located on an upper side thereof.
